# EUROPEAN PATENT APPLICATION

(11) **EP 4 840 647 A1**
(43) Date of publication of application: **18.11.2026**
(21) Application number: 26176547.3
(22) Date of filing: 05.05.2026
(51) Int. Cl.: B41M 3/06, B41M 7/00, B41M 3/00, B41M 3/16, B41M 3/18, B41M 5/00

(54) **METHOD FOR PRODUCING RECORDED MATTER HAVING STEREOSCOPIC IMAGE**

(30) Priority: 12.05.2025 JP 2025079150; 20.04.2026 JP 2026069436
(71) Applicant: Canon Kabushiki Kaisha, Tokyo 146-8501 (JP)
(72) Inventor: OMAGARI, Toshihiro, Tokyo (JP); TANAKA, Takatoshi, Tokyo (JP); NAGASE, Yoshiyuki, Tokyo (JP)
(74) Representative: WESER & Kollegen Patentanwälte PartmbB

(57) **Abstract**

A method for producing a recording recorded matter having a stereoscopic image is provided, the method being capable of allowing a stereoscopic image to be formed by highspeed printing, the stereoscopic image having a reduced density difference between foamed sites and unfoamed sites in the image and expressing a clear feeling of surface unevenness with sufficient foam heights.

## Description

### TECHNICAL FIELD

The present disclosure relates to a method for producing a recorded matter having a stereoscopic image.

### BACKGROUND

As a technique to produce a recorded matter having a stereoscopic image with surface unevenness formed thereon, such as wallpapers and Braille, a method of forming surface unevenness by physical pressing such as embossing is conventionally employed. However, in the present age with rapidly advancing digitalization, a method of printing with UV-curable ink in an overlapping manner is increasingly employed in place of such a physical method. In the case of that printing method, increasing the frequency of printing with ink in an overlapping manner leads to increased printing time, but enables formation of higher protrusions.

In recent years, to fit with high-speed printing, a recording medium has been proposed, the recording medium being provided with a foaming layer containing a foaming material that foams by heat and being controllable for the degree of foaming by means of a foaming control liquid. Furthermore, in view of environmental consciousness and adaptation to lower temperature, a technique using a foaming promotion liquid that lowers the foaming start temperature of foaming material as a foaming control liquid has been proposed.

Under such circumstances, for example, a method for producing a recorded matter having a stereoscopic color image by applying an aqueous foaming control liquid and an aqueous color ink to a recording medium provided with a foaming layer containing a foaming material that foams by heat and then causing the foaming layer to foam by heating has been provided (Japanese Patent Laid-Open No. 2020-50719). In addition, a method for producing a recorded matter having a stereoscopic image by using a recording medium capable of allowing a stereoscopic image to be formed, the stereoscopic image having a reduced density difference between foamed sites and unfoamed sites in the color image and expressing a clear feeling of surface unevenness with sufficient foam heights, has been provided. (Japanese Patent Laid-Open No. 2023-158262).

### SUMMARY

The present disclosure is directed to providing a method for producing a recorded matter having a stereoscopic image, the method being capable of allowing a stereoscopic image to be formed by high-speed printing, the stereoscopic image having a reduced density difference between foamed sites and unfoamed sites in the image and expressing a clear feeling of surface unevenness with sufficient foam heights.

Specifically, the present disclosure in its first aspect provides a method for producing a recorded matter having a stereoscopic image as specified in claim1. Optional features are specified in claims 2 to 6.

According to the present disclosure, a method for producing a recorded matter having a stereoscopic image can be provided, the method being capable of allowing a stereoscopic image to be formed by high-speed printing, the stereoscopic image having a reduced density difference between foamed sites and unfoamed sites in the image and expressing a clear feeling of surface unevenness with sufficient foam heights.

Features of the present disclosure will become apparent from the following description of embodiments with reference to the attached drawings. The following description of embodiments is described by way of example.

### BRIEF DESCRIPTION OF THE DRAWINGS

Fig. 1 is a cross-sectional view schematically illustrating an example of a recording medium.
Fig. 2 is a schematic diagram illustrating the schematic configuration of a production apparatus for a recorded matter having a stereoscopic image.

### DESCRIPTION OF THE EMBODIMENTS

The present disclosure will be described in detail below by showing illustrative embodiments. In the present disclosure, if a compound is a salt, the salt dissociates and exists as ions in aqueous ink, and this situation is expressed as "containing a salt" for convenience. Aqueous ink for inkjet is occasionally written as "ink", simply. Unless otherwise stated, values of physical properties are those at normal temperature (25°C), normal pressure (1 atm = 101,325 Pa) and normal humidity (relative humidity of 50%).

If a large amount of a foaming suppression liquid has been applied to a recording medium provided with a foaming layer containing a foaming material that foams by heat in the method proposed in Japanese Patent Laid-Open No. 2020-50719, sufficient drying is needed before application of a color ink. For this reason, it is difficult to form a stereoscopic image by high-speed printing, the stereoscopic image having a reduced density difference between foamed sites and unfoamed sites in the color image and expressing a clear feeling of surface unevenness with sufficient foam heights. The method proposed in Japanese Patent Laid-Open No. 2023-158262 has a problem with production cost because of the requirement for providing a color-developing layer and has difficulty in forming a stereoscopic image with sufficient foam heights by high-speed printing. Under such circumstances, the present inventors have examined on a method for producing a recorded matter having a stereoscopic image, the method being capable of allowing a stereoscopic image to be formed by high-speed printing, the stereoscopic image having a reduced density difference between foamed sites and unfoamed sites in the image and expressing a clear feeling of surface unevenness with sufficient foam heights, and eventually reached the present disclosure.

### <Method for producing recorded matter having stereoscopic image>

The method of the present disclosure for producing a recorded matter having a stereoscopic image includes: application of an aqueous ink; application of a foaming control liquid; and formation of a stereoscopic image. The application of an aqueous ink is applying an aqueous ink containing a coloring material to a foaming layer of a recording medium including a substrate and the foaming layer provided on the substrate, wherein the foaming layer contains a foaming material that foams by heat and a binder resin. The application of a foaming control liquid is applying an aqueous foaming control liquid that controls the foaming of the foaming material to the foaming layer having the aqueous ink applied thereto. The formation of a stereoscopic image is forming a stereoscopic image by heating the foaming layer having the aqueous ink and the foaming control liquid applied thereto to cause the foaming material to foam.

In the application of an aqueous ink, an ink is applied to a foaming layer of a recording medium. Through this, liquid components in the ink permeate inside the foaming layer, and the coloring material in the ink is fixed to the foaming layer. The fixation of the coloring material to the foaming layer can be accelerated by controlling the surface tension of the ink to be used.

In the application of a foaming control liquid, a foaming control liquid is applied to the foaming layer having the ink applied thereto. The foaming control liquid can be allowed to sufficiently act on the whole of the foaming layer by adjusting the surface tension of the foaming control liquid to be used. Subsequently, in the formation of a stereoscopic image, the foaming layer after allowing the foaming control liquid to act on the foaming layer is dried by heating. Thereby, parts having the foaming control liquid applied thereto in the foaming layer can be foamed selectively with sufficient foam heights.

In the case that an ink is further applied after applying a foaming control liquid and then high-speed printing is performed, the ink is applied before the foaming control liquid has sufficiently permeated the foaming layer, and this leads to the situation that the coloring material in the ink readily migrates to unintended places. As a result, color unevenness is generated in the image, and foamed parts tend to have lower color densities. In the case that a foaming control liquid is further applied after applying an ink and then high-speed printing is performed, on the other hand, the foaming control liquid applied onto the ink readily diffuses in a heterogenous manner. This results in insufficient foam heights, and thus in difficulty in expressing a clear feeling of surface unevenness.

The present inventors have examined to find that satisfying requirements of (i) and (ii) shown below allows a stereoscopic image to be formed by high-speed printing, the stereoscopic image having a reduced density difference between foamed sites and unfoamed sites in the image and expressing a clear feeling of surface unevenness with sufficient foam heights.
(i) After an ink is applied to a foaming layer, a foaming control liquid is further applied.
(ii) The static surface tension of the ink, γ1 (mN/m), and the static surface tension of the foaming control liquid, y2 (mN/m), satisfy a relationship of the following formula (1): $\left|γ1-γ2\right| \leq 5$ (1).

If the requirement of (i) is satisfied, the permeation of the ink into the foaming layer is accelerated, and the fixation of the coloring material in the ink to the foaming layer is accelerated, and as a result the migration of the coloring material throughout the foaming layer is suppressed, even when a foaming control liquid is further applied after the ink has been applied. This enables formation of an image having sufficient densities even at foamed parts and successfully gives a reduced density difference between foamed sites and unfoamed sites in the image.

If the requirement of (ii) is satisfied, the foaming control liquid, even if further applied after the ink has been applied, is homogeneously diffused into the ink and sufficiently permeates into the foaming layer. This enables formation of a stereoscopic image expressing a clear feeling of surface unevenness with sufficient foam heights. If a foaming promotion liquid is applied to a foaming layer and then an ink is further applied, on the other hand, it is difficult to suppress the migration of the coloring material in the ink throughout the foaming layer. Accordingly, although a stereoscopic image with sufficient foam heights is formed, the densities are insufficient, and it is difficult to achieve a reduced density difference between foamed sites and unfoamed sites in the image.

### (Recording medium)

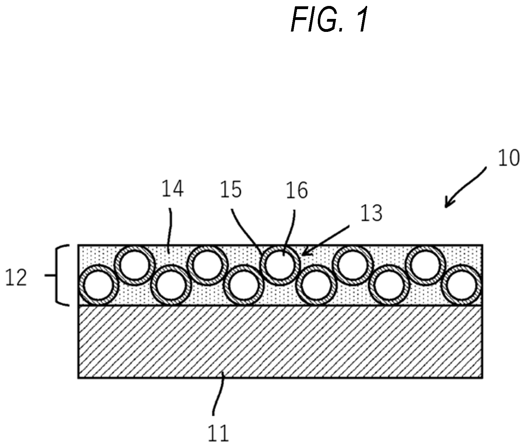

Fig. 1 is a cross-sectional view schematically illustrating an example of a recording medium. As illustrated in Fig. 1, a recording medium 10 includes a substrate 11 and a foaming layer 12 provided on the substrate 11 and containing a foaming particle 13 that foams by heat. The following describes details on the recording medium for use in the method of the present disclosure for producing a recorded matter.

### [Substrate]

The substrate 11 functions as a support for supporting the foaming layer 12 (Fig. 1). The substrate is not limited to any particular type. Examples of the substrate can include: a paper sheet, which is typically composed of natural pulp; a Kenaf paper sheet; a plastic film sheet made of polypropylene, polyethylene, polyester, or the like; and what is called a synthetic paper sheet or nonwoven fabric, which mimics paper with synthetic fiber, synthetic pulp, or a synthetic resin film.

### [Foaming layer]

As illustrated in Fig. 1, the foaming layer 12 is a layer provided on at least one surface of the substrate 11 and containing a foaming material such as the foaming particle 13 and a binder resin 14. Since the foaming layer 12 expands by heat, the foaming layer 12 is also called a thermally expandable layer. For the foaming material, a chemical foaming material or a foaming material of microcapsule type (foaming particle 13) can be used. Especially, the foaming material of microcapsule type (foaming particle 13) is preferable. The foaming particle 13 has a capsule-like shell layer 15 formed of thermoplastic resin and a volatile material 16 encapsulated in the shell layer 15. That is, the foaming particle 13 has a structure in which volatile material 16 is enclosed within thermoplastic resin. The foaming particle 13 is also called a foaming particle of thermally expandable microcapsule type or a thermally expandable particle. When heat is applied to the foaming particle 13, the resin constituting the shell layer 15 softens, and the volatile material 16 encapsulated in the shell layer 15 vaporizes to undergo volume expansion. As a result, the foaming particle 13 expands like a balloon.

Examples of the thermoplastic resin constituting the shell layer can include polystyrene, styrene-acrylate copolymer, polyamide resin, polyacrylate, polyvinylidene chloride, polyacrylonitrile, polymethyl methacrylate, vinylidene chloride-acrylonitrile copolymer, methacrylate-acrylic acid copolymer, vinylidene chloride-acrylic acid copolymer and vinylidene chloride-acrylate copolymer.

Examples of the volatile material can include: low-molecular-weight hydrocarbon such as ethane, ethylene, propane, propene, n-butane, isobutane, n-pentane, isopentane, neopentane, n-hexane, heptane and petroleum ether; chlorofluorocarbon such as CCl₃F, CCl₂F₂, CClF₃ and CClF₂-CClF₂; and tetraalkylsilane such as tetramethylsilane, trimethylethylsilane, trimethylisopropylsilane and trimethyl-n-propylsilane. Especially, the volatile material is preferably a hydrocarbon having a molecular weight of 120 or less. Preferably, the lower limit of the molecular weight of the volatile material (hydrocarbon) is, for example, 50 or more, but is not limited particularly thereto. The amount of the foaming material, such as the foaming particle, contained in the foaming layer is preferably 5% by mass or more and 95% by mass or less, and more preferably 20% by mass or more and 70% by mass or less based on the total mass of the foaming layer.

The foaming layer 12 contains a binder resin 14 that enhances the adhesion between the foaming layer 12 and the substrate 11. By virtue of the binder resin 14 contained in the foaming layer 12, the foaming layer 12 is successfully prevented from peeling off from the substrate 11 when the foaming particle 13 in the foaming layer 12 foams. It is preferable to use a water-insoluble resin as the binder resin. With the use of a water-insoluble resin as the binder resin, the binder resin is hardly dissolved by moisture in the foaming control liquid, and the lowering of the adhesion between the foaming layer and the substrate is successfully prevented. Moreover, the lowering of the adhesion between the foaming layer and the substrate is successfully prevented even if an ink containing water is applied to the recording medium.

The term water-insoluble resin herein refers to such a resin that 95% by mass or more of the resin remains after soaking in hot water at 80°C for 2 hours. The water-insoluble resin is preferably at least one selected from the group consisting of acrylic resin and urethane resin. The water-insoluble resin is more preferably at least one selected from the group consisting of acrylic resin having no ester group and urethane resin having no ester group. The water-insoluble resin is preferably resin that is not absorptive for water.

The amount of the water-insoluble resin contained in the foaming layer is preferably 10% by mass or more and 95% by mass or less, and more preferably 30% by mass or more and 70% by mass or less based on the total mass of the foaming layer. The glass transition temperature of the binder resin is preferably -10°C or more and 30°C or less. With the glass transition temperature of the binder resin falling within the range, the binder resin is successfully prevented from interfering with the foaming of the foaming material. The foaming layer preferably contains a water-soluble resin in addition to the water-insoluble resin. Since the foaming layer contains a water-soluble resin, the penetration of the foaming control liquid into the foaming layer is facilitated, and the foam heights at the time of foaming can be further increased. The water-soluble resin is preferably polyvinyl alcohol. Furthermore, the content of the water-soluble resin in the foaming layer is preferably 6% by mass or more and 40% by mass or less based on the total mass of the foaming layer. By keeping the content of the water-soluble resin in the foaming layer within the above range, the permeation of the foaming control liquid into the foaming layer can be facilitated while suppressing the lowering of adhesion between the foaming layer and the substrate due to moisture contained in the foaming control liquid and the ink.

The mass ratio between the foaming material and the binder resin is preferably foaming material:binder resin = 5:95 to 90:10, and more preferably 30:70 to 70:30. With the mass ratio between the foaming material and the binder resin falling within the range, the foamability of the foaming material and the bindability of the binder resin to the substrate are both successfully enhanced. The foaming layer may further contain any of components including pigments, antioxidants, dyes and surfactants as long as the foamability is not impaired.

### (Method for producing recording medium)

To produce a recording medium, first, a surface of a substrate is coated with a coating liquid for a foaming layer containing a foaming material to form a coating layer. Subsequently, the resulting coating layer is dried to form a foaming layer, and as a result a recording medium can be provided. For coating a surface of a substrate with a coating liquid for a foaming layer, for example, an air-knife coater, a die coater, a blade coater, a gate-roll coater, a bar coater, a rod coater, a roll coater, a gravure coater, and a curtain coater, each of which has been known, are applicable. Examples of methods for drying the coating layer can include a method of blowing hot air. Appropriate drying conditions (such as temperature, air volume and time) can be set to fit with the type of the substrate, the composition of the coating liquid, and so on. However, the temperature in drying needs to be lower than the foaming start temperature of the foaming material to be used.

It is preferable to provide 2 g/m² or more of the foaming layer per one face of the substrate. Foamability can be much enhanced by providing 2 g/m² or more of the foaming layer. Alternatively, a recording medium provided in advance with a foaming layer containing a foaming material may be used.

In the surface of the substrate, the face opposite to the face to be provided with the foaming layer may be provided with a backcoat layer. The backcoat layer may be a layer identical to the foaming layer containing a foaming material or a layer differing from the foaming layer. A pressure-sensitive adhesive layer containing pressure-sensitive adhesive resin such as acrylic resin or an ink-receiving layer to fix the coloring material may be formed.

### (Aqueous ink)

The ink is an aqueous ink containing a coloring material. Examples of the coloring material can include pigments and dyes. Especially, it is preferable to use a pigment as the coloring material. Specific examples of the pigment can include: inorganic pigments such as carbon black and titanium oxide; and organic pigments such an azo pigments, phthalocyanine pigments, perylene pigments, perinone pigments, quinacridone pigments, dioxazine pigments, diketopyrrolopyrrole pigments, quinophthalone pigments, isoindolinone pigments and imidazolone pigments. Examples of the mode of dispersion of the pigment can include resin-dispersed pigments, in which resin is used as a dispersant (resin dispersant), and self-dispersed pigments, in which hydrophilic groups are bound to the surfaces of pigment particles. Alternatively, for example, resin-bound pigments obtained by chemically binding resin-containing organic groups to the surfaces of pigment particles and microcapsule pigments obtained by covering the surfaces of pigment particles with resin or the like are applicable.

The amount (% by mass) of the pigment contained in the ink is preferably 1.0% by mass or more and 10.0% by mass or less, and further preferably 2.0% by mass or more and 8.0% by mass or less based on the total mass of the ink.

The ink is an aqueous ink containing water or an aqueous medium as a mixed solvent of water and a water-soluble organic solvent. It is preferable to use deionized water (ion-exchanged water) as the water. The amount (% by mass) of water contained in the ink is preferably 50.0% by mass or more and 95.0% by mass or less based on the total mass of the ink.

Any of water-soluble organic solvents that are applicable to inks for inkjet such as alcohols, glycols, (poly)alkylene glycols, nitrogen-containing compounds and sulfur-containing compounds can be used. The amount (% by mass) of the water-soluble organic solvent contained in the ink is preferably 3.0% by mass or more and 50.0% by mass or less based on the total mass of the ink. If the amount of the water-soluble organic solvent contained is out of the range, slight reduction in reliability as an aqueous ink for inkjet such as agglutination resistance may be caused.

In addition to the components shown above, the ink may contain a water-soluble organic compound that is solid at 25°C, such as a polyhydric alcohol such as trimethylolpropane and trimethylolethane, urea, and a urea derivative such as ethyleneurea, as necessary. Further, the ink may contain any of various additives including surfactants, pH adjusters, defoamers, rust inhibitors, preservatives, antifungal agents, antioxidants, antireductants and chelating agents, as necessary.

In the present disclosure, the viscosity of the ink at a temperature of 25°C is preferably 1.0 mPa·s or more and 10.0 mPa·s or less, more preferably 1.0 mPa·s or more and 5.0 mPa·s or less, and further preferably 1.0 mPa·s or more and 3.5 mPa.s or less. The static surface tension of the ink, γ1, at a temperature of 25°C is preferably 22 mN/m or more and 45 mN/m or less. Further, the pH of the ink is preferably 7.0 or more and 9.0 or less. The static surface tension of the ink, γ1, can be measured by the Wilhelmy method (plate method). The value of the static surface tension of the ink, γ1, can be appropriately adjusted, for example, with the type and amount of a surfactant.

### (Foaming control liquid)

The foaming control liquid is an aqueous liquid composition that controls the foaming of the foaming material. The aforementioned static surface tension of the ink, γ1 (mN/m), and the static surface tension of the foaming control liquid, y2 (mN/m), satisfy a relationship of formula (1) shown below. The static surface tension of the ink, γ1 (mN/m), and the static surface tension of the foaming control liquid, y2 (mN/m), preferably satisfy a relationship of formula (2) shown below. With γ1 and γ2 satisfying formula (2) shown below, a stereoscopic image having a more reduced density difference between foamed sites (first region) and unfoamed sites (second region) in the image is successfully formed. $\left|γ1-γ2\right| \leq 5$ (1) $\left|γ1-γ2\right| \leq 3$ (2)

Furthermore, it is preferable that γ1 and y2 satisfy a relationship of formula (3) shown below. When γ1 and y2 satisfy the relationship of formula (3) shown below, an image having a higher color developing property can be formed. $γ 1 < γ 2$ (3)

### [Foaming control component]

The foaming control liquid contains, for example, a foaming control component that promotes or suppresses the foaming (thermal expansion) of the foaming material. Hereinafter, a foaming control component that promotes the foaming of the foaming material is also referred to as a "foaming promotion component" or "thermal expansion promotion component", and a foaming control component that suppresses the foaming of the foaming material is also referred to as a "foaming suppression component" or "thermal expansion suppression component". The static surface tension of the foaming control liquid, γ2, is preferably 20 mN/m or more and 40 mN/m or less, more preferably 22 mN/m or more and 38 mN/m or less. With the static surface tension of the foaming control liquid, γ2, being 20 mN/m or more, the foaming control liquid suppresses excessive wetting of the surface of the foaming layer, thereby readily permeating into the foaming layer. As a result, larger foam heights tend to be provided. Furthermore, by setting the static surface tension y2 of the foaming control liquid to 40 mN/m or less, the foaming control liquid can easily penetrate into the foaming layer, and the foam heights can be increased. The static surface tension of the foaming control liquid, γ2, can be measured by the Wilhelmy method (plate method). The value of the static surface tension of the foaming control liquid, γ2, can be appropriately adjusted, for example, with the type and amount of a surfactant. The foaming control liquid is preferably a foaming promotion liquid containing a foaming promotion component that lowers the foaming start temperature (thermal expansion start temperature) of the foaming material and water.

### [Foaming promotion component]

The foaming promotion component is a component that accelerates the foaming of the foaming material, for example, a component that lowers the foaming start temperature of the foaming material. Once a foaming control liquid containing a foaming promotion component (foaming promotion liquid) is applied to the foaming layer of the recording medium, the foaming promotion component in the foaming promotion liquid acts on the foaming material in the foaming layer, and the foaming start temperature of the foaming material is lowered.

In the case that a foaming particle of microcapsule type is used as the foaming material, the foaming promotion component is a component capable of softening the thermoplastic resin constituting the shell layer of the foaming particle. An appropriate foaming promotion component can be selected for use to fit with, for example, the type of the thermoplastic resin. Specific examples of the foaming promotion component can include 2-pyrrolidone, dimethyl sulfoxide, N,N-dimethylformamide and N-methyl-2-pyrrolidone. The foaming promotion component is preferably a compound having no hydroxy group. A compound that less absorbs heat to foam the foaming particle and has a low heat of evaporation with a boiling point of 210°C or less is preferably used as the foaming promotion component. Specifically, dimethyl sulfoxide, N,N-dimethylformamide and N-methyl-2-pyrrolidone are preferable as the foaming promotion component.

The absolute value of the difference between the solubility parameter of the thermoplastic resin constituting the shell layer of the foaming particle (microcapsule) (SP1) and the solubility parameter of the foaming promotion component (SP2), |SP1 - SP2|, is preferably 3.5 or less. With the absolute value of the difference between the solubility parameters falling within the numerical range, more enhanced foamability is successfully imparted to the region having the foaming promotion liquid containing the foaming promotion component applied thereto.

The absolute value of the difference between the Hansen solubility parameter of the thermoplastic resin constituting the shell layer of the foaming particle (microcapsule) (HSP1) and the Hansen solubility parameter of the foaming promotion component (HSP2), |HSP1 - HSP2|, is preferably 20 or less. With the absolute value of the difference between the Hansen solubility parameters falling within the numerical range, more enhanced foamability is successfully imparted to the region having the foaming promotion liquid containing the foaming promotion component applied thereto.

The solubility parameters (SP values) of the thermoplastic resin constituting the shell layer and the foaming promotion component are each a value determined by calculation. The Hansen solubility parameters (HSP values) of the thermoplastic resin constituting the shell layer and the foaming promotion component are each an actual measurement obtained through measurement and calculation by dynamic light scattering.

In the case that a chemical foaming material is used as the foaming material, the foaming promotion component is a component that chemically accelerates chemical reaction necessary for generating a gas from the chemical foaming material. The foaming promotion component in this case only needs to be a component that chemically accelerates chemical reaction necessary for generating a gas from the chemical foaming material, and an appropriate foaming promotion component can be selected for use to fit with the type of the chemical foaming material. Examples of the foaming promotion component in this case can include: urea compounds such as urea; and zinc compounds.

The amount of the foaming promotion component contained in the foaming promotion liquid is preferably 20% by mass or more and 90% by mass or less, and more preferably 20% by mass or more and 70% by mass or less based on the total mass of the foaming promotion liquid. With the amount of the foaming promotion component contained falling within the range, the foamability of the foaming material is successfully enhanced.

### [Foaming suppression component]

The foaming suppression component is a component that suppresses the foaming of the foaming material, for example, a component that raises the foaming start temperature of the foaming material or a component that inhibits the foaming (forces not to foam) of the foaming material. Once a foaming control liquid containing a foaming suppression component (foaming suppression liquid) is applied to the foaming layer of the recording medium, the foaming suppression component in the foaming suppression liquid acts on the foaming material in the foaming layer, and the foaming start temperature of the foaming material is raised, or the foaming material becomes unfoamable.

In the case that a foaming particle of microcapsule type is used as the foaming material, the foaming suppression component is a component capable of hardening or excessively softening the thermoplastic resin constituting the shell layer of the foaming particle. Using a component that hardens the thermoplastic resin constituting the shell layer of the foaming particle as the foaming suppression component is expected to result in the raising of the foaming start temperature of the foaming particle. On the other hand, using a component that excessively softens the thermoplastic resin constituting the shell layer of the foaming particle as the foaming suppression component is expected to result in generation of a hole in the shell layer when the foaming particle expands, inhibiting the foaming of the foaming particle.

As the component that excessively softens the thermoplastic resin constituting the shell layer among variations of the foaming suppression component, the same component as the foaming promotion component is applicable. In the case that the same component as the foaming promotion component is used as the foaming suppression component, the amount of the foaming suppression component contained in the foaming suppression liquid is preferably more than 90% by mass and 100% by mass or less, and further preferably 95% by mass or more and 100% by mass or less based on the total mass of the foaming suppression liquid.

The absolute value of the difference between the solubility parameter of the thermoplastic resin constituting the shell layer of the foaming particle (microcapsule) (SP1) and the solubility parameter of the foaming suppression component (SP2), |SP1 - SP2|, is preferably 3.5 or less. With the absolute value of the difference between the solubility parameters falling within the numerical range, more lowered foamability is successfully imparted to the region having the foaming suppression liquid containing the foaming suppression component applied thereto.

The absolute value of the difference between the Hansen solubility parameter of the thermoplastic resin constituting the shell layer of the foaming particle (microcapsule) (HSP1) and the Hansen solubility parameter of the foaming suppression component (HSP2), I HSP1 - HSP2 | , is preferably 20 or less. With the absolute value of the difference between the Hansen solubility parameters falling within the numerical range, more lowered foamability is successfully imparted to the region having the foaming suppression liquid containing the foaming suppression component applied thereto.

The solubility parameters (SP values) of the thermoplastic resin constituting the shell layer and the foaming suppression component are each a value determined by calculation. The Hansen solubility parameters (HSP values) of the thermoplastic resin constituting the shell layer and the foaming suppression component are each an actual measurement obtained through measurement and calculation by dynamic light scattering.

In the case that a chemical foaming material is used as the foaming material, the foaming suppression component is a component that chemically suppresses chemical reaction necessary for generating a gas from the chemical foaming material. The foaming suppression component in this case only needs to be a component that chemically suppresses generation of a gas from the chemical foaming material, and an appropriate foaming suppression component can be selected for use to fit with the type of the chemical foaming material. Examples of the foaming suppression component in this case can include benzotriazole-based compounds such as 1,2,3-benzotriazole, 1-[N,N-bis(2-ethylhexyl)aminomethyl]benzotriazole, 1-[N,N-bis(2-ethylhexyl)aminomethyl]methylbenzotriazole and 2,2'-[[(methyl-1H-benzotriazol-1-yl)methyl]imino]bisethanol.

The amount of the foaming suppression component (except for the component that excessively softens the thermoplastic resin constituting the shell layer) contained in the foaming suppression liquid is preferably 0.1% by mass or more and 5.0% by mass or less, and more preferably 0.1% by mass or more and 2.0% by mass or less based on the total amount of the foaming suppression liquid.

### [Additional component]

In the case that the foaming control component is liquid at normal temperature (25°C), the foaming control component itself can be used as the foaming control liquid. The foaming control liquid may further contain a component other than the foaming control component (additional component). For example, the foaming control liquid preferably further contains a liquid component such as a solvent in order to enhance the discharge stability of the foaming control liquid. Water and various water-soluble organic solvents are applicable as the solvent. It is preferable to use deionized water (ion-exchanged water) as the water. Examples of the water-soluble organic solvents can include alcohols, glycols, glycol ethers and nitrogen-containing compounds.

Any of water-soluble organic compounds that are solid at a temperature of 25°C, such as urea and derivatives thereof, trimethylolpropane and trimethylolethane, can be used as an additional component other than the liquid components. Further, the foaming control liquid may contain any of various additives including pH adjusters, defoamers, rust inhibitors, preservatives, antifungal agents, antioxidants, antireductants and chelating agents, as necessary.

In the present disclosure, the viscosity of the foaming control liquid at a temperature of 25°C is preferably 1.0 mPa·s or more and 10.0 mPa·s or less, more preferably 2.0 mPa·s or more and 7.0 mPa·s or less.

### (Reaction liquid)

Preferably, the method of the present disclosure for producing a recorded matter having a stereoscopic image further includes applying an aqueous reaction liquid containing a reactant that reacts with the aqueous ink to the foaming layer. Applying an aqueous reaction liquid is preferably prior to applying the aqueous ink. By applying a reaction liquid to the foaming layer and then further applying the ink, the fixation of the ink is further accelerated to give higher densities to the image and successfully result in a much reduced density difference between foamed sites and unfoamed sites in the image. Furthermore, it is preferable that the static surface tension y3 (mN/m) of the reaction liquid and the static surface tension γ1 (mN/m) of the ink satisfy formula (4) shown below. $γ 3 < γ 1$ (4)

### [Reactant]

The reaction liquid reacts with the ink by contact with the ink to cause the aggregation of components (components having an anionic group such as pigments, resin particles and wax particles) in the ink, and contains a reactant. Examples of the reactant can include organic acids, polyvalent metal salts and cationic resins.

### [Organic acid]

The reaction liquid, when containing an organic acid, has buffer capacity for an acidic region (less than pH 7.0, preferably pH 2.0 to 5.0), and thereby efficiently converts anionic groups of components present in the ink into the acidic forms and causes the aggregation of the components. Examples of the organic acid can include: monocarboxylic acids such as formic acid, acetic acid, propionic acid, butyric acid, benzoic acid, glycolic acid, lactic acid, salicylic acid, pyrrolecarboxylic acid, furancarboxylic acid, picolinic acid, nicotinic acid, thiophenecarboxylic acid, levulinic acid and coumaric acid, and salts thereof; dicarboxylic acids such as oxalic acid, malonic acid, succinic acid, glutaric acid, adipic acid, maleic acid, fumaric acid, itaconic acid, sebacic acid, phthalic acid, malic acid and tartaric acid, and salts and hydrogen salts thereof; tricarboxylic acids such as citric acid and trimellitic acid, and salts and hydrogen salts thereof; and tetracarboxylic acids such as pyromellitic acid, and salts and hydrogen salts thereof. The amount (% by mass) of the organic acid contained in the reaction liquid is preferably 1.0% by mass or more and 50.0% by mass or less based on the total mass of the reaction liquid.

### [Polyvalent metal salt]

The polyvalent metal salt is a compound constituted with a divalent or higher-valent metal ion (polyvalent metal ion) and an anion. The polyvalent metal salt dissociates to give a polyvalent metal ion in the reaction liquid, and causes the aggregation of a pigment and the like that are dispersed by the action of anionic groups in the ink. Examples of the polyvalent metal ion can include divalent metal ions such as Ca²⁺, Cu²⁺, Ni²⁺, Mg²⁺, Sr²⁺, Ba²⁺ and Zn²⁺, and trivalent metal ions such as Fe³⁺, Cr³⁺, Y³⁺ and Al³⁺. Examples of the anion constituting the polyvalent metal salt can include: inorganic anions such as Cl⁻, Br⁻, I⁻, ClO⁻, ClO₂⁻, ClO₃⁻, ClO₄⁻, NO₂⁻, NO₃⁻, SO₄²⁻, CO₃²⁻, HCO₃⁻, PO₄³⁻, HPO₄²⁻ and H₂PO₄⁻; and organic anions such as HCOO⁻, (COO⁻)₂, COOH(COO⁻), CH₃COO⁻, C₂H₅COO⁻, CH₃CH(OH)COO⁻, C₂H₄(COO⁻)₂, C₆H₅COO⁻, C₆H₄(COO⁻)₂ and CH₃SO₃⁻.

Specific examples of the polyvalent metal salt can include calcium carbonate such as ground calcium carbonate and precipitated calcium carbonate, calcium nitrate, calcium chloride, calcium sulfate, magnesium sulfate, calcium hydroxide, magnesium chloride, magnesium carbonate, barium sulfate, barium chloride, zinc carbonate, zinc sulfide, aluminum silicate, calcium silicate, magnesium silicate, copper nitrate, calcium acetate, magnesium acetate, aluminum acetate, aluminum sulfate, calcium methanesulfonate, calcium lactate, magnesium lactate, calcium propionate, calcium acetate, calcium pantothenate and calcium gluconate. These polyvalent metal salts may have hydration water. The amount (% by mass) of the polyvalent metal salt contained in the reaction liquid is preferably 1.0% by mass or more and 20.0% by mass or less based on the total mass of the reaction liquid. The "amount (% by mass) of the polyvalent metal salt contained" in the reaction liquid in the case that the polyvalent metal salt is a hydrate herein is the "amount (% by mass) of the anhydride of the polyvalent metal salt contained" with the water forming the hydrate excluded.

### [Cationic resin]

The cationic resin has a cationic site in the structure of the resin, and causes the aggregation of a pigment and the like that are dispersed by the action of carboxylic acid groups in the ink. Examples of the cationic resin can include resins having the structure of primary to tertiary amine and resins having the structure of quaternary ammonium salt. Specific examples include resins having any of the structures of vinylamine, allylamine, vinylimidazole, vinylpyridine, dimethylaminoethyl methacrylate, ethyleneimine, guanidine, diallyldimethylammonium chloride and an alkylamine-epichlorohydrin condensate. For increased solubility in the reaction liquid, the cationic resin can be used in combination with an acidic compound or subjected to quaternization treatment. The amount (% by mass) of the cationic resin contained in the reaction liquid is preferably 0.1% by mass or more and 10.0% by mass or less based on the total mass of the reaction liquid.

### [Aqueous medium]

The reaction liquid is an aqueous reaction liquid at least containing water as an aqueous medium. Examples of the aqueous medium to be used for the reaction liquid can include those identical with the aqueous media that can be contained in the ink. The amount (% by mass) of water contained in the reaction liquid is preferably 50.0% by mass or more based on the total mass of the reaction liquid.

The aqueous medium can further contain a water-soluble organic solvent. The amount (% by mass) of the water-soluble organic solvent contained in the reaction liquid is preferably 5.0% by mass or more and 40.0% by mass or less, and further preferably 15.0% by mass or more and 30.0% by mass or less based on the total mass of the reaction liquid. If the amount of the water-soluble organic solvent contained in the reaction liquid is out of the range, discharge failure may occur.

### [Additional component]

The reaction liquid may contain various additional components, as necessary. Examples of the additional components can include various additives including defoamers, surfactants, pH adjusters, viscosity modifiers, rust inhibitors, preservatives, antifungal agents, antioxidants and antireductants.

### <Production apparatus for recorded matter having stereoscopic image>

A production apparatus for a recorded matter having a stereoscopic image (hereinafter, also referred to as the "recorded matter production apparatus" or the "production apparatus", simply) includes: a foaming control liquid application unit that applies a foaming control liquid to a recording medium; and a heating unit that heats a foaming layer of the recording medium having the foaming control liquid applied thereto. The recording medium includes a substrate and a foaming layer provided on the substrate, wherein the foaming layer contains a foaming material that foams by heat, such as a foaming particle of microcapsule type, and a binder resin. The foaming control liquid contains a foaming control component that controls the foaming of the foaming material and water. The heating unit is a unit that forms a stereoscopic image by heating the foaming layer of the recording medium to cause the foaming material to foam. The recorded matter production apparatus can be preferably used for the above-described method for producing a recorded matter.

The recorded matter production apparatus may include an ink storage section that stores an ink and an ink application unit for recording an image on the recording medium by discharging the ink from an inkjet recording head. In addition, the recorded matter production apparatus may include a foaming control liquid storage section that stores the foaming control liquid. Furthermore, the recorded matter production apparatus may include a conveying unit for conveying the recording medium.

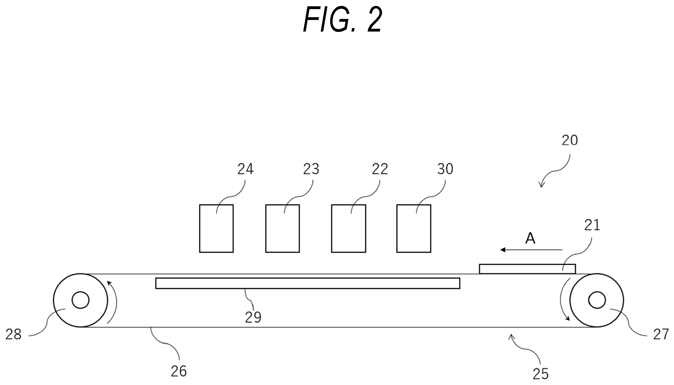

Fig. 2 is a schematic diagram illustrating the schematic configuration of the production apparatus for a recorded matter having a stereoscopic image. The recorded matter production apparatus 20 illustrated in Fig. 2 includes an ink applicator 22, a foaming control liquid applicator 23, a heating apparatus 24, and a conveyor 25. A recording medium 21 is conveyed by the conveyor 25, which is a conveying unit for conveying the recording medium 21, in the direction of an arrow symbol A in Fig. 2. The conveyor 25 includes a conveyor belt 26, which is an endless belt, and a pair of rollers 27 and 28 holding the conveyor belt 26. The rollers 27 and 28 are rotationally driven, and thereby the recording medium 21 is conveyed in the direction of the arrow symbol A. The conveyor 25 may further include a platen 29 that regulates the up-and-down displacement of the conveyor belt 26. The recorded matter production apparatus preferably includes a reaction liquid applicator 30, which is a reaction liquid application unit that applies a reaction liquid to the recording medium. The reaction liquid applicator 30 is preferably disposed on the upstream side of the ink applicator 22 in the conveying direction of the recording medium 21.

The ink applicator 22, which is an ink application unit, includes a recording head of inkjet type that discharges the ink. The ink discharged from the recording head through the inkjet process is applied to the foaming layer of the recording medium 21 conveyed by the conveyor 25. The foaming control liquid applicator 23, which is a foaming control liquid application unit, includes a recording head of inkjet type that discharges the foaming control liquid. The foaming control liquid discharged from the recording head through the inkjet process is applied to the foaming layer of the recording medium 21 conveyed by the conveyor 25. The heating apparatus 24 is a heating unit that heats the foaming layer of the recording medium 21 having the ink and the foaming promotion liquid applied thereto. The heating apparatus 24 can be a heating apparatus capable of heating the foaming material in the foaming layer to a desired temperature. Examples of the heating apparatus 24 can include a dryer, an oven, a heater, and an iron. The reaction liquid applicator 30, which is a reaction liquid application unit, includes a recording head of inkjet type that discharges the reaction liquid. The reaction liquid discharged from the recording head through the inkjet process is applied to the foaming layer of the recording medium 21 conveyed by the conveyor 25.

### EXAMPLES

Hereinafter, the present disclosure is described in more detail by showing examples and comparative examples, but the present disclosure is by no means limited by examples shown below without departing from the gist of the present disclosure. The terms "part" and "%" on the amount of a component are on mass basis, unless otherwise stated.

### <Preparation of foaming particle>

Product name "Expancel 007-40" (manufactured by Japan Fillite Co., Ltd.) was prepared as a foaming particle. This foaming particle is a foaming particle of microcapsule type having a shell layer formed of polyacrylonitrile. The foaming start temperature of the foaming particle prepared was measured by using a thermomechanical analyzer (TMA) (product name: "TMA 2940", manufactured by TA Instruments) according to the following procedure. In an aluminum container having a diameter of 7 mm and a depth of 1 mm, 25 µg of a sample was put, and subjected to a load of 0.1 N applied from the top. While this state was kept, the sample was heated from 60°C to 200°C at a temperature increase rate of 5°C/min, and the displacement of the measuring terminal in the vertical direction was measured. Then, the temperature at which the displacement began was determined as the "foaming start temperature". The result showed that the foaming start temperature was "91°C".

### <Preparation of water-insoluble thermoplastic resin>

Into a flask equipped with a stirrer, 83 parts of methyl methacrylate (MMA), 167 parts of n-butyl acrylate (n-BA), 5 parts of acrylic acid (AA), 112.5 parts of ion-exchanged water, 13 parts of reactive surfactant and 0.3 parts of ammonium persulfate were put. The reactive surfactant used was product name "ADEKA REASOAP ER-10" (manufactured by ADEKA Corporation, concentration: 30%). The contents were stirred by using the stirrer at 600 rpm, giving a first emulsified liquid. Into a flask equipped with a stirrer, a condenser tube, a dropping pump and a temperature controller, 3.3 parts of the above reactive surfactant, 0.075 parts of ammonium persulfate, 5.6 parts of the first emulsified liquid and 162.5 parts of ion-exchanged water were put. After nitrogen purge, the resultant was heated for 30 minutes until 80°C was reached, giving a second emulsified liquid. After 106.9 parts of the first emulsified liquid was added dropwise to the second emulsified liquid over 3 hours, the resultant was aged by heating for 1 hour, giving a third emulsified liquid. After cooled to 30°C or less, the third emulsified liquid was neutralized by adding an aqueous solution of ammonium, and diluted with ion-exchanged water, giving an emulsion of acrylic polymer (solid content: 43%) as water-insoluble thermoplastic resin.

The glass transition temperature of the thermoplastic resin (acrylic polymer) was measured by using a differential scanning calorimeter (product name: "DSC 2500", manufactured by TA Instruments) according to a procedure shown in the following. The emulsion prepared was subjected to evaporation to dryness to give a sample, and approximately 2 mg of the sample was weighed out on an aluminum pan. The aluminum pan was set to the DSC measurement holder, a chart was acquired under a temperature increase condition of 5°C/min, and an endothermic peak in the chart was determined as the "glass transition temperature (Tg (°C))".

The glass transition temperature (Tg) of the acrylic polymer was determined to be -10°C.

The average particle diameter (D50) of the resin (acrylic polymer) in the emulsion was determined by using a particle-size distribution analyzer (product name: "NANOTRAC WAVE", manufactured by MicrotracBEL Corp.) based on dynamic light scattering according to a procedure shown in the following. The emulsion was diluted with pure water in such a manner that the temperature fell within the measurement range to prepare a sample. Then, the average particle diameter (volume-based cumulative 50% particle diameter (median diameter; D50)) of the acrylic polymer in the emulsion was determined under measurement conditions shown below. The average particle diameter (D50) of the acrylic polymer was determined to be 350 to 400 nm.

### [Measurement conditions]

- Setzero: 30 s
- Number of measurement: 3 times
- Measurement time: 180 s
- Shape: perfect sphere
- Refractive index: 1.59

### <Preparation of polyvinyl alcohol>

Polyvinyl alcohol (product name: "Poval 5-88", manufactured by Kuraray Co., Ltd.) was dissolved in ion-exchanged water, giving an aqueous solution of polyvinyl alcohol.

### <Production of recording medium>

### (Recording medium)

A roll of polypropylene synthetic paper (product name: "NEW YUPO FGS110", manufactured by YUPO CORPORATION) was prepared as a substrate. The emulsion of the acrylic polymer, the foaming particle and the aqueous solution of polyvinyl alcohol were added to ion-exchanged water at acrylic polymer:foaming particle:polyvinyl alcohol = 80:50:16 (mass ratio). Thereafter, the resultant was sufficiently stirred, giving a coating liquid for a foaming layer (solid content: 35%). By using a gravure coater, the substrate was coated with the coating liquid obtained, and dried with hot air at 70°C for 1 minute to form a foaming layer having a thickness of 40 µm; thus, a roll-shaped recording medium was obtained.

### <Preparation of reaction liquid>

### (Reaction liquid 1)

8.0 parts of magnesium sulfate heptahydrate, 3.0 parts of 1, 2-butanediol, 0.1 parts of an acetylene glycol-based nonionic surfactant (Trade name "Acetylenol E100", manufactured by Kawaken Fine Chemicals Co., Ltd.), and 88.9 parts of ion-exchanged water were mixed, stirred sufficiently, and then pressure-filtered through a cellulose acetate filter having a pore size of 3.0 µm (manufactured by ADVANTEC TOYO KAISHA, LTD.) to prepare reaction solution 1.

### <Preparation of ink>

### (Ink 1)

A mixture was obtained by mixing 10.0 parts of a pigment (C.I. Pigment Red 122), 9.4 parts of liquid containing styrene-acrylic acid copolymer (acid value: 120 mg KOH/g, weight-average molecular weight: 8,000) and 80.6 parts of ion-exchanged water. The mixture obtained and 200 parts of zirconia beads (diameter: 0.3 mm) were put in a batch-type vertical sand mill (manufactured by AIMEX CO., LTD.), dispersed for 5 hours with water cooling, and then centrifuged to remove coarse particles. The resultant was pressure-filtered through a cellulose acetate filter having a pore size of 3.0 µm (manufactured by Advantech Co., Ltd.), giving a pigment dispersion such that the amount of the pigment contained therein was 10.0% and the amount of the resin dispersant (styrene-acrylic acid copolymer) contained therein was 3.0%. Fifty parts of the pigment dispersion obtained, 15 parts of glycerin, 10 parts of ethylene glycol, 0.35 parts of nonionic surfactant (product name: "Acetylenol E60", manufactured by Kawaken Fine Chemicals Co., Ltd.) and 24.5 parts of ion-exchanged water were mixed, and sufficiently stirred. The resultant was pressure-filtered through a filter having a pore size of 1.2 µm, giving ink 1. The static surface tension of ink 1, γ1, was measured by using an automatic surface tensiometer (product name: "CPVP-Z", manufactured by Kyowa Interface Science Co., Ltd.), and found to be 33 mN/m.

### (Inks 2 to 4)

Inks 2 to 4 were obtained in the same manner as for ink 1 shown above, except that surfactants of types shown in Table 1 were used and adjustment was performed to give static surface tensions, γ1, shown in Table 1.

**Table 1**

| | Surfactant | Static surface tension γ1 (mN/m) |
|---|---|---|
| Ink 1 | Acetylenol E60 | 33 |
| Ink 2 | Acetylenol E60 | 34 |
| Ink 3 | BYK-349 | 22 |
| Ink 4 | Acetylenol E60 | 31 |

### <Preparation of foaming control liquid>

### (Foaming control liquid 1)

35 parts of dimethyl sulfoxide, 0.5 parts of nonionic surfactant (product name: "Acetylenol E60", manufactured by Kawaken Fine Chemicals Co., Ltd.) and 64.5 parts of ion-exchanged water were mixed. The resultant was sufficiently stirred, and then pressure-filtered through a filter having a pore size of 1.2 µm, giving foaming control liquid 1. The static surface tension of foaming control liquid 1, γ2, was measured by using an automatic surface tensiometer (product name: "CPVP-Z", manufactured by Kyowa Interface Science Co., Ltd.), and found to be 34 mN/m.

### (Foaming control liquids 2 to 13 and 15)

Foaming control liquids 2 to 13 and 15 were obtained in the same manner as for foaming control liquid 1 shown above, except that foaming control components of types and amount, and surfactants of types shown in Table 2 were used and adjustment was performed to give static surface tensions shown in Table 2.

### (Foaming control liquid 14)

0.1 parts of nonionic surfactant (product name: "Acetylenol E60", manufactured by Kawaken Fine Chemicals Co., Ltd.) and 99.9 parts of ion-exchanged water were mixed. The resultant was sufficiently stirred, and then pressure-filtered through a filter having a pore size of 1.2 µm, giving foaming control liquid 14. The static surface tension of foaming control liquid 14 obtained, γ2, was found to be 34 mN/m.

**Table 2**

| | Foaming control component | | Surfactant | Static surface tension γ2 (mN/m) |
|---|---|---|---|---|
| | Type | Amount (% by mass) | | |
| Foaming control liquid 1 | dimethyl sulfoxide | 35 | Acetylenol E60 | 34 |
| Foaming control liquid 2 | dimethyl sulfoxide | 35 | Acetylenol E60 | 33 |
| Foaming control liquid 3 | N,N-dimethylformamide | 35 | Acetylenol E60 | 34 |
| Foaming control liquid 4 | N-methyl-2-pyrrolidone | 35 | Acetylenol E60 | 34 |
| Foaming control liquid 5 | dimethyl sulfoxide | 35 | BYK-349 | 23 |
| Foaming control liquid 6 | dimethyl sulfoxide | 35 | Acetylenol E60 | 38 |
| Foaming control liquid 7 | dimethyl sulfoxide | 10 | Acetylenol E60 | 34 |
| Foaming control liquid 8 | dimethyl sulfoxide | 20 | Acetylenol E60 | 34 |
| Foaming control liquid 9 | dimethyl sulfoxide | 70 | Acetylenol E60 | 34 |
| Foaming control liquid 10 | dimethyl sulfoxide | 80 | Acetylenol E60 | 34 |
| Foaming control liquid 11 | 2-pyrrolidone | 35 | Acetylenol E60 | 34 |
| Foaming control liquid 12 | 2-pyrrolidone | 10 | Acetylenol E60 | 38 |
| Foaming control liquid 13 | dimethyl sulfoxide | 35 | Acetylenol E60 | 39 |
| Foaming control liquid 14 | None | 0 | Acetylenol E60 | 34 |
| Foaming control liquid 15 | N-formylmorpholine | 50 | BYK-349 | 23 |

### <Production of recorded matter>

### (Example 1)

The recording medium was heated in advance to reach a surface temperature of 40°C. After that, a stereoscopic image was formed on the recording medium as follows by using the production apparatus 20 for a recorded matter having a stereoscopic image illustrated in Fig. 2. First, reaction liquid 1 was applied to a square (20 mm × 20 mm) area of the foaming layer of the recording medium heated in advance to 40°C at 4 ng / (600 dpi × 600 dpi) by means of the reaction liquid applicator 30 including a recording head of inkjet type. Next, by means of the ink applicator 22 including a recording head of inkjet type, ink 1 was applied to a square (20 mm × 20 mm) area of the foaming layer of the recording medium at 20 ng / (600 dpi × 600 dpi) to overlap with the region having reaction liquid 1 applied thereto. Further, 0.5 seconds after the application of ink 1, foaming control liquid 1 was applied to a square (10 mm × 10 mm) area centered in the square area having ink 1 applied thereto at 24 ng / (600 dpi × 600 dpi) by means of the foaming control liquid applicator 23 including a recording head of inkjet type. Five seconds after the application of foaming control liquid 1, a stereoscopic image was formed by heating with hot air at 93°C for 15 seconds by means of the heating apparatus 24; thus, recorded matter 1 was obtained.

### (Examples 2 to 14, Comparative Examples 3 and 4)

Recorded matters 2 to 14, 17, and 18 were obtained in the same manner as in Example 1 shown above, except that inks and foaming control liquids in combinations shown in Table 3 were used to form stereoscopic images.

### (Comparative Example 1)

The recording medium was heated in advance to reach a surface temperature of 40°C. After that, a stereoscopic image was formed on the recording medium as follows by using a production apparatus given by exchanging the positions of the ink applicator 22 and the foaming control liquid applicator 23 in the production apparatus 20 for a recorded matter having a stereoscopic image illustrated in Fig. 2. First, reaction liquid 1 was applied to a square (20 mm × 20 mm) area of the foaming layer of the recording medium heated in advance to 40°C at 4 ng / (600 dpi × 600 dpi) by means of the reaction liquid applicator 30 including a recording head of inkjet type. Next, by means of the foaming control liquid applicator 23 including a recording head of inkjet type, foaming control liquid 1 was applied to a square (20 mm × 20 mm) area of the foaming layer of the recording medium at 24 ng / (600 dpi × 600 dpi) to overlap with the region having reaction liquid 1 applied thereto. Further, 0.5 seconds after the application of foaming control liquid 1, ink 1 was applied to a square (10 mm × 10 mm) area centered in the square area having foaming control liquid 1 applied thereto at 20 ng / (600 dpi × 600 dpi) by means of the ink applicator 22 including a recording head of inkjet type. Five seconds after the application of ink 1, a stereoscopic image was formed by heating with hot air at 93°C for 15 seconds by means of the heating apparatus 24; thus, recorded matter 15 was obtained.

### (Comparative Example 2)

In the production apparatus 20 for a recorded matter having a stereoscopic image illustrated in Fig. 2, the positions of the reaction liquid applicator 30, the ink applicator 22, and the foaming control liquid applicator 23 were changed so that the foaming control liquid, the reaction liquid, and the ink were applied to the recording medium in this order. Except for this point, a stereoscopic image was formed in the same manner as in Comparative Example 1, and recorded matter 16 was obtained.

### (Comparative Example 5)

A stereoscopic image was formed in the same manner as in Comparative Example 1, except that ink 1 was changed to ink 3 and foaming control liquid 1 was changed to foaming control liquid 15, and recorded matter 19 was obtained.

### <Evaluation>

### (Density difference)

For each of the stereoscopic images formed, the density in foamed sites and the density in unfoamed sites were measured by using a reflectance spectrodensitometer (product name: "FD-7", manufactured by KONICA MINOLTA, INC., light source: D50, field of view: 2°, status: A). Then, the difference between the density in foamed sites and the density in unfoamed sites (density difference) was calculated, and the density difference was evaluated according to evaluation criteria shown below. The results are shown in Table 3.
AA: the density difference was less than 0.05, such that no density difference was sensed.
A: the density difference was 0.05 or more and less than 0.08, such that much density difference was not sensed.
B: the density difference was 0.08 or more and less than 0.12, such that slight density difference was sensed but there was no problem with gradation.
C: the density difference was 0.12 or more, such that clear density difference was sensed.

### (Foam heights)

For the surface of each of the recorded matters obtained, the heights of the foamed part (foam heights) with reference to the height of the unfoamed part were measured using a digital micrometer (trade name "M-30", manufactured by Sony). Then, the foam heights of the stereoscopic image were evaluated according to evaluation criteria shown below. The results are shown in Table 3.
AA: the foam heights were 280 µm or more.
A: the foam heights were 250 µm or more and less than 280 µm.
B: the foam heights were 150 µm or more and less than 250 µm.
C: the foam heights were less than 150 µm.

**Table 3**

| | | Recorded matter | Ink | Foaming control liquid | Order of application | \|γ1-γ2\| (mN/m) | Density difference | Foam heights |
|---|---|---|---|---|---|---|---|---|
| | 1 | 1 | 1 | 1 | ink → foaming control liquid | 1 | AA | AA |
| | 2 | 2 | 2 | 2 | ink → foaming control liquid | 1 | AA | AA |
| | 3 | 3 | 1 | 3 | ink → foaming control liquid | 1 | AA | AA |
| | 4 | 4 | 1 | 4 | ink → foaming control liquid | 1 | AA | AA |
| | 5 | 5 | 3 | 5 | ink → foaming control liquid | 1 | AA | AA |
| | 6 | 6 | 1 | 1 | ink → foaming control liquid | 1 | AA | A |
| Example | 7 | 7 | 4 | 1 | ink → foaming control liquid | 3 | AA | AA |
| | 8 | 8 | 1 | 6 | ink → foaming control liquid | 5 | A | A |
| | 9 | 9 | 1 | 7 | ink → foaming control liquid | 1 | A | AA |
| | 10 | 10 | 1 | 8 | ink → foaming control liquid | 1 | AA | AA |
| | 11 | 11 | 1 | 9 | ink → foaming control liquid | 1 | AA | AA |
| | 12 | 12 | 1 | 10 | ink → foaming control liquid | 1 | A | AA |
| | 13 | 13 | 1 | 11 | ink → foaming control liquid | 1 | A | AA |
| | 14 | 14 | 1 | 12 | ink → foaming control liquid | 5 | B | B |
| Comparative Example | 1 | 15 | 1 | 1 | foaming control liquid → ink | 1 | AA | C |
| | 2 | 16 | 1 | 1 | foaming control liquid → ink | 1 | AA | C |
| | 3 | 17 | 1 | 13 | ink → foaming control liquid | 6 | B | C |
| | 4 | 18 | 1 | 14 | ink → foaming control liquid | 1 | C | AA |
| | 5 | 19 | 3 | 15 | foaming control liquid → ink | 1 | AA | C |

Various embodiments have been described in detail above but it will be understood that the present disclosure is not limited to these embodiments and encompasses all modifications, variants, alternatives and equivalents falling within the scope of the appended claims.

## Claims

1. A method for producing a recorded matter having a stereoscopic image, the method comprising:
applying an aqueous ink containing a coloring material to a foaming layer (12) of a recording medium (10) comprising a substrate (11) and the foaming layer (12) provided on the substrate (11), wherein the foaming layer (12) contains a foaming material (13) that foams by heat and a binder resin (14);
applying an aqueous foaming control liquid that controls foaming of the foaming material (13) to the foaming layer (12) having the aqueous ink applied thereto; and
forming a stereoscopic image by heating the foaming layer (12) having the aqueous ink and the foaming control liquid applied thereto to cause the foaming material (13) to foam, wherein
a static surface tension of the aqueous ink, γ1 (mN/m), and a static surface tension of the foaming control liquid, γ2 (mN/m), satisfy a relationship of the following formula (1): $\left|γ1-γ2\right| \leq 5$ (1).

2. The method for producing a recorded matter having a stereoscopic image according to claim 1, further comprising applying an aqueous reaction liquid containing a reactant that reacts with the aqueous ink to the foam.

3. The method for producing a recorded matter having a stereoscopic image according to claim 1 or 2, wherein the static surface tension of the aqueous ink, γ1 (mN/m), and the static surface tension of the foaming control liquid, γ2 (mN/m), satisfy a relationship of the following formula (2): $\left|γ1-γ2\right| \leq 3$ (2).

4. The method for producing a recorded matter having a stereoscopic image according to any one of claims 1 to 3, wherein the foaming control liquid is a foaming promotion liquid containing a foaming promotion component that lowers a foaming start temperature of the foaming material and water.

5. The method for producing a recorded matter having a stereoscopic image according to claim 4, wherein the foaming promotion component is at least one selected from the group consisting of dimethyl sulfoxide, N,N-dimethylformamide and N-methyl-2-pyrrolidone.

6. The method for producing a recorded matter having a stereoscopic image according to any one of claims 1 to 5, wherein the ink and the foaming control liquid are each discharged from a recording head of inkjet type to be applied to the foaming layer.
